# EUROPEAN PATENT APPLICATION

(11) **EP 2 237 527 A1**
(43) Date of publication of application: **06.10.2010**
(21) Application number: 09160755.6
(22) Date of filing: 20.05.2009
(51) Int. Cl.: H04L 29/08, H04W 4/02

(54) **Method and apparatus for determining location information**

(30) Priority: 31.03.2009 EP 09290241
(71) Applicant: Thomson Licensing, 92130 Issy-les-Moulineaux (FR)
(72) Inventor: Chen, Jian Feng, 92243 Issy-Les-Moulineaux (FR); Lui, Peng, 92443 Issy-Les-Moulineaux (FR); Liao, Ning, 92443 Issy-Les-Moulineaux (FR); Shi, Yun Tao, 92443 Issy-Les-Moulineaux (FR); Niu, Ben, 92443 Issy-Les-Moulineaux (FR); Xiang, Juan, 92443 Issy-Les-Moulineaux (FR)
(74) Representative: Ruellan-Lemonnier, Brigitte

(57) **Abstract**

A method for determining location information used in an electronic device of a communication system including a plurality of electronic devices, comprising: transmitting a position request signal via a plurality of communication networks of the communication system; receiving a position response signal with respective location information from at least one electronic devices of the plurality of electronic devices; and determining position information of the electronic device by the received position response signal; wherein the position request signal is transmitted successively to the plurality of networks in a specific order among said networks until the location information of the electronic device is determined based on the location response signal.

## Description

### FIELD OF THE INVENTION

The present invention relates to communication system, and more particularly, to a method and apparatus for obtaining location information in a plurality of communication networks of the communication system.

### BACKGROUND OF THE INVENTION

There is increasing interest to location technologies and location based mobile services in communication system. The location of a user or user device in the communication networks is often needed to perform a function, for example, Location Based Service (LBS) provides automatic delivery of information and services based on the current location of a user.

There are two typical types of LBS, one is for location tracking and monitoring, for example, U.S. patent 2008/0242319 discloses a method for monitoring a mobile device and generating a notification for transmission over a video network. U.S. patent application 11/445,730 provides a method for displaying the location of individuals on an interactive map display on a mobile communication device. The other type of LBS is for information sharing and notification, such as U.S patent 2008/0086368 discloses a location based and content targeted online advertising service. It's apparent that geography or location information is a necessary precondition for the deployment of LBS.

For a location aware device which can detect location information itself, its location information can be obtained because of the equipment of position determination techniques including Global Positioning System (GPS), Assisted GPS (AGPS) techniques, or other relating technologies. However, for those location unaware devices which can not detect location information, how to acquire the accurate location position is a problem.

One method for location unaware devices to obtain its location information is to input the text-mode information of nearby object (building, street, park etc.) manually, then send query to the location server of a mobile network, such as Google map, to retrieve the accurate geography information, the shortcoming is obvious that the user should have understanding of surrounding environment in advance and the manual input is not convenient.

Another method is based on empirical signal strength measurements, and uses signal strength information gathered at multiple receiver locations to create a look-up table. The method consists of 'offline' and 'on-line' stages. During offline stage, measurement of the received signal strength at known locations is carried out by the user device or other measurement receiver. In addition to the signal strength, other signal pattern such as SNR (signal to noise ratio) can also be used. The collected signal pattern are stored in a location database of the user device to relate the signal information and coordinates of the known locations, so called radio map. During on-line stage, the signal strength actually received from the access points are used to "search" the radio map to estimate the user location. However, this method should depend on the signal detection from the access point or base station in cellular network, and the radio frequency signal in wireless network is variation and fluctuation caused by noisy characteristics of wireless channel and interference from environment, for example, people moving in the environment, doors opening and closing, and something like that. The samples measured in the online phase may be deviated significantly from those stored in the radio map. Therefore, the accurate location information is difficult to be obtained based on the look-up table.

Therefore, an improved method for obtaining location information in the wireless communication network is needed.

### SUMMARY OF THE INVENTION

The invention concerns a method for determining location information used in an electronic device of a communication system including a plurality of electronic devices, comprising: transmitting a location request signal via a plurality of communication networks of the communication system; receiving a location response signal with respective location information from at least one communication device of the plurality of communication devices; and determining location information of the electronic device as a function of the received location response signal; wherein the location request signal is transmitted successively to the plurality of networks in a specific order among said networks until the location information of the electronic device is determined based on the location response signal.

The invention also concerns an electronic device of a communication system including a plurality of electronic devices, comprising: a plurality of communication interface for connecting with a plurality communication networks of the communication system; a transmitter for transmitting a location request signal via the plurality of communication interfaces; a receiver for receiving a location response signal with respective location information from at least one electronic devices of the plurality of electronic devices; and a processing device for determining location information of the electronic device by the received location response signal; wherein the location request signal is transmitted successively to the plurality of networks in a specific order among said networks until the location information of the electronic device is determined based on the location response signal.

### BRIEF DESCRIPTION OF DRAWINGS

These and other aspects, features and advantages of the present invention will become apparent from the following description of an embodiment in connection with the accompanying drawings:
Fig.1 is an illustrative diagram of a communication system used to explain an embodiment of the invention;
Fig.2 is a block diagram showing an electronic device according to the embodiment of the invention;
Fig.3 is a diagram showing a message flow for obtaining location information according to the embodiment of the invention;
Fig. 4 is an illustrative table showing a location report according to the embodiment of the invention; and
Fig. 5 is a flow chart showing a method for obtaining location information according to the embodiment of the invention.

### DETAILED DESCRIPTION OF PREFERRED EMBODIMENTS

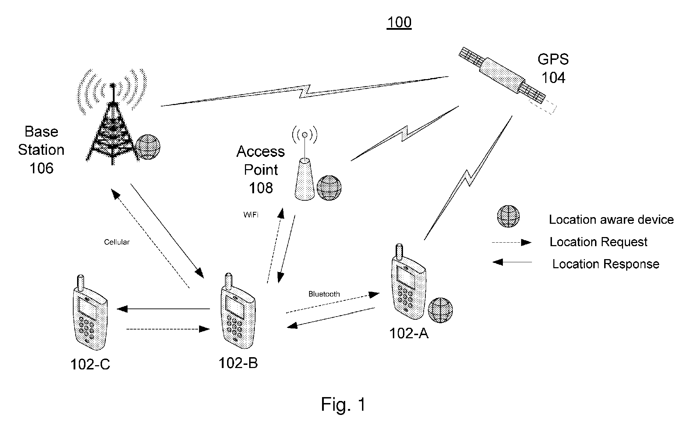

Fig. 1 shows an illustrative diagram of a communication system 100 which comprises multiple mobile devices 102 A-C, base station 106 and access point 108. Reference 104 represents Global Positioning System (GPS) satellites, which are not part of the communication system per se. Although a limited number of elements are shown in the figure for purpose of illustration, it can be appreciated that the communication system 100 may include more elements in accordance with the described embodiment. The communication system 100 may be a cellular network such as GSM/CDMA/UMTS/WiMAX/LTE network which includes a corresponding base station 106. The cellular network may further include a WiFi/Sensor network with an access point 108. In addition, a Bluetooth communication network can also be used for peer to peer communication over a short distance.

The mobile devices 102 may be implemented as mobile telephone, personal digital assistant (PDA), and any other type of equipment or wireless computing devices. In the communication system 100, for example, mobile device 102-A is a location aware device with a component of GPS or AGPS function, that is, it can obtain location information for example including altitude, latitude and longitude when its location is changed, by analysing signals provided by the GPS system 104 based on GPS technology. The GPS technology is known in the art, and its detailed description is omitted herein.

On the other hand, when a location unaware device 102-B wants to know its position information, it may uses various communication interfaces to obtain location information from other location aware devices, such as mobile device 102-A, or even other any electronic device in the communication system 100 which knows its own location, such as a base station, an access point. Here, the other electronic device can be a fixed device in one place and its location information is also fixed. Although the electronic device knows its own location, it is not defined as a location aware device because it can not determine or calculate its location information by itself when its location is changed as the location aware device. So such electronic device is called as a location unaware device.

The mobile device 102-B may comprise a plurality of communication interfaces (not shown) for connecting with a plurality of communication networks of the communication system 100, for example different communication interfaces for connecting with a GSM network, a WiMAX network, a WiFi network, a WLAN network and so on. The Bluetooth network uses an open standard for short-range transmission of digital devices. It provides up to 720Kbps data transfer rate with a coverage range of 10 meters. Bluetooth uses omni-directional radio waves that can cross walls and other non-metal barriers.

In addition, Wireless Local Area Networks (WLAN) including access point 108 adapts IEEE802.11b based standard which defines 11 Mbps data rate with a coverage range of 50-300 meters. WiMAX network with base stations 106 provides up to 70Mbps data transfer rate with a coverage range of 2Km.

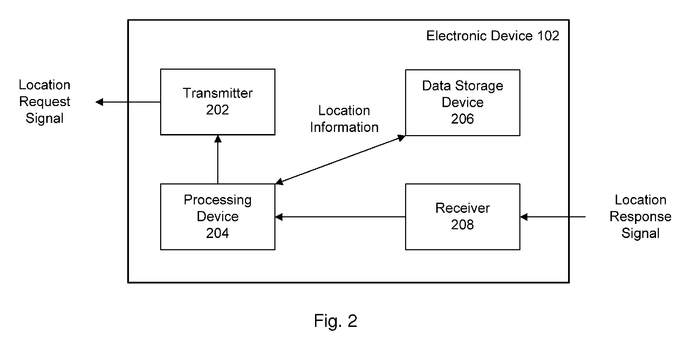

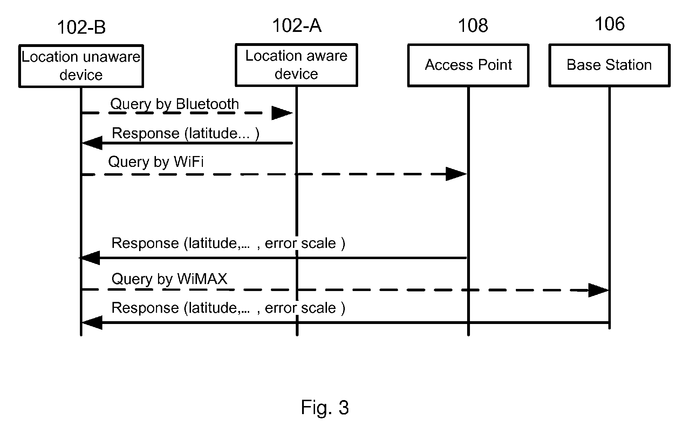

Fig.2 is a block diagram showing an electronic device 102, and Fig.3 is a diagram showing a message flow for obtaining location information according to the embodiment of the invention. The electronic device 102 comprises a processing device 204, a transmitter 202, a receiver 208 and a data storage device 206. The processing device 204 is adapted to handle communication with the various networks and exchange data with other electronic devices in the communication system 100 via respective communication interfaces, and perform a process flow to determine location information of the electronic device 102. The transmitter 202 and receiver 208 are adapted to transmit/receive signal and data in the communication system 100. The storage device 206 is adapted for storing the data to be processed by the processing device 204. Preferably, the communication interface, the processing device 204, the transmitter 202, the receiver 208 and the memory 206 can be combined in whole or in part and fabricated as an integrated circuit.

According to the embodiment, the location unaware device 102-B transmits a location request signal to other electronic device in the communication system 100, such as mobile device 102-A and 102-C, in accordance with a specific order of coverage range of the plurality of communication networks. The specific order can be from small to large coverage range, that is, an ascending order of the coverage range of the plurality of communication networks. For example, the electronic device 102-B firstly sends location request signal via Bluetooth interface, to neighbour devices inside the coverage range of Bluetooth network because of its short distance coverage. According to the embodiment, location request signal may have a message format of any type of communication message running on MAC or IP layer, which includes a message header and a message payload.

The message header of the location request signal generally includes a source address, a destination address and a message type. Here, for example the source address is the IP address of the location unaware device 102-B, the destination address is broadcast address of the Bluetooth network, and the message type is predetermined as 0x01 for location request. The message payload of the location request signal includes a type of the interface, and here it is set as 0x01 for Bluetooth interface. In addition, 0x02 can be set for WiFi interface, 0x03 is set for WiMAX interface, and 0x04 for GSM interface.

When other electronic devices in the Bluetooth network receive the location request signal transmitted from the location unaware device 102-B, they may share their location information by sending a location response signal. The location information includes position coordinates of Global Positioning System coordinates, such as geographic information including altitude, latitude and longitude. Then the location unaware device 102-B uses this received location information as its location information, and obtains location based services.

The location response signal may have a message format of any type of communication message running on MAC or IP layer, which includes a message header and a message payload. The message header of the location response signal generally includes a source address, a destination address and a message type. Here, for example the source address is the IP address of the location aware device 102-A, and the message type is predetermined as 0x00 for location response, the destination address is the address of the location unaware device 102-B which transmits the location request. The message payload of the location response signal includes a type of the interface, and here it is set as 0x01 for Bluetooth interface. In addition, 0x02 can be set for WiFi interface, 0x03 is set for WiMAX interface, and 0x04 for GSM interface. In addition, the payload will include a location information, such as longitude 205° 23'44.1" and latitude 57°55'56.6".

According to the embodiment, if more than one location information is received from a plurality of neighbouring location aware devices within Bluetooth network, or other networks, the electronic device 102-B may determine its location based on this location information, such as calculating an average value of these received location information, or determine the received location information corresponding to the message with the largest signal strength as the location information of the device 102-B.

On the other hand, if no response is received from the Bluetooth network, the electronic device 102-B can transmit the location request signal successively to the plurality of networks in a specific order among the networks until the location information of the electronic device is determined based on the location response signal. For example, another network, for example a WiFi network, which has a larger coverage range than Bluetooth, but with a smaller coverage range than yet another network, can be used to transmit the further location request signal. In this order, the location unaware device 102-B may receive a response and determine its location from a WiFi network or WiMAX network. In the WiFi and WiMAX network, the access point and base station will transfer the location request signal to mobile devices of its network and transfer the location information to the original querying device 102-B. In addition, if the access point and base station have a location information, they can also send them to the device 102-B. As shown in Fig.3, the location request message is transmitted to a location aware device, access point and base station respectively in different networks, and the response can be received from the corresponding network.

In addition, an expired time representing the available duration for the respective network to provide a response can be predetermined, so that the location unaware device 102-B can send the location request signal to the next network, or start another round of sending requests if no response is received within the specified time duration.

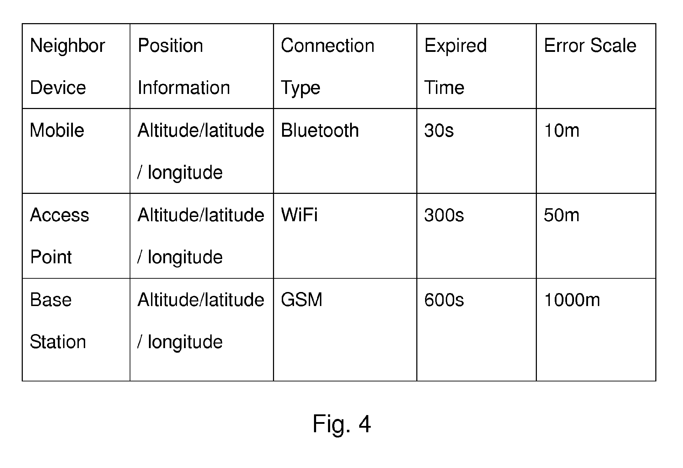

Fig.4 is an illustrative table showing a location report according to the embodiment of the invention. As shown in Fig.4, the location information from different networks received at different times can be recorded in a table and stored in a memory such as flash memory, RAM or a hard disk. The type of the neighbouring device, position information, connection type, the expired time and error margin will be recorded. The error margin shows the error of the location based on the coverage range of the network. For example, when radius of the coverage range of Bluetooth network is 10m, the location information in the location response signal will be within 10m, so the error margin is 10m.

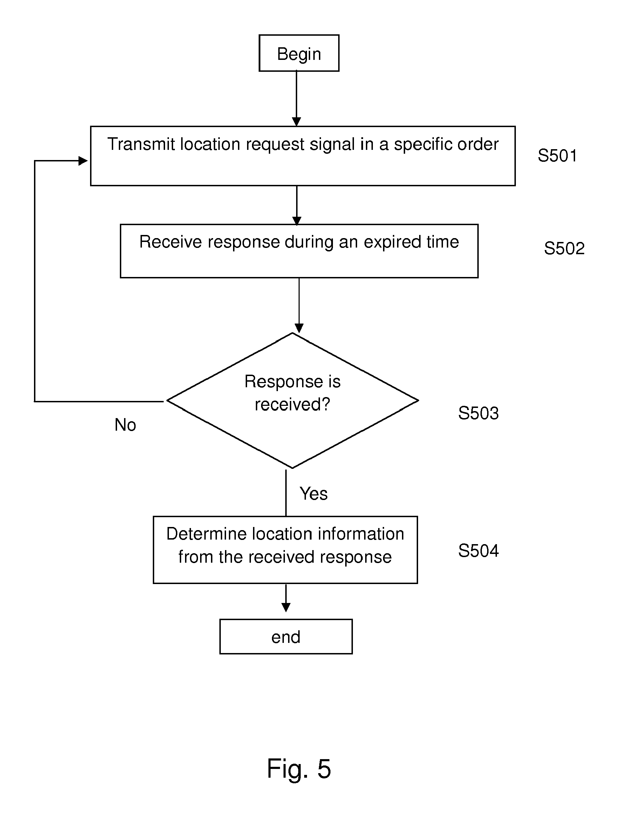

Fig.5 shows is a flow chart showing a method for obtaining location information according to the embodiment of the invention. At step 501, the location unaware device 102-B transmits a location request signal in accordance of a specific order of the coverage range of the communication network via the corresponding communication interface by the transmitter 202, for example the order can be from the shortest connection range interface to the largest connection range, that the order is Bluetooth as the first network, WiFi as the second one, and the WiMAX as the third one. Then at step 502, during a predetermined expired time, the location unaware device 102-B waits to receive a response signal from other devices of the corresponding network, and if the expired time is elapsed, no response is received by the receiver 208 at step 503, the process flow will return to step 501 to transmit a request signal within the next network according to the specific order defined above. If there is response at step 503, the location information of the location unaware device 102-B will be determined from the received response at step 504 and displayed on a display device to users.

Although according to the embodiment of the invention the location aware device 102-A responds to the location request signal of the location unaware device 102-B, however, other location unaware electronic devices, such as base station or access point which know their location information can also share their location information and respond to the location request signal. That is, any communication devices which know their location information can respond to the location request signal.

Although the location unaware device 102-B is described in the embodiment to transmit a location request signal, however, the location aware devices can also send the request signal to obtain precise location information according to the response from other communication devices in the communication system.

According to an alternative embodiment, if there are more than one communication networks with the same coverage range, the request signal will be transmitted by each network one by one to get the response with location information with the same error margin. Compared to other location acquiring method, the position information based on the above embodiments is directly retrieved from the neighbour communication devices quickly.

The foregoing merely illustrates the embodiment of the invention and it will thus be appreciated that those skilled in the art will be able to devise numerous alternative arrangements which, although not explicitly described herein, embody the principles of the invention and are within its spirit and scope.

## Claims

1. A method for determining location information used in an electronic device of a communication system including a plurality of communication devices, comprising:
transmitting a location request signal via a plurality of communication networks of the communication system;
receiving a location response signal with respective location information from at least one communication device of the plurality of communication devices; and
determining location information of the electronic device as a function of the received location response signal;
wherein the location request signal is transmitted successively to the plurality of networks in a specific order among said networks until the location information of the electronic device is determined based on the location response signal.

2. The method according to claim 1, wherein the specific order among said networks includes an ascending order of coverage range of the plurality of communication networks.

3. The method according to claim 1 or 2, wherein the communication device comprises one or more of the following: a base station, an access point, a wireless communication device.

4. The method according to any one of the preceding claims, wherein the step of determining further comprises:
when more than one location information is received, the location information of the electronic device is obtained by averaging the more than one location information.

5. The method according to any one of the preceding claims, wherein the location request signal and the location response signal is transmitted via wireless communication.

6. The method according to any one of the preceding claims, wherein the location information includes position coordinates of Global Positioning System coordinates.

7. An electronic device of a communication system including a plurality of electronic devices, comprising:
a plurality of communication interface for connecting with a plurality communication networks of the communication system;
a transmitter for transmitting a location request signal via the plurality of communication interfaces;
a receiver for receiving a location response signal with respective location information from at least one electronic devices of the plurality of electronic devices; and
a processing device for determining location information of the electronic device by the received location response signal;
wherein the location request signal is transmitted successively to the plurality of networks in a specific order among said networks until the location information of the electronic device is determined based on the location response signal.

8. The electronic device according to claim 6, wherein the specific order among said networks includes an ascending order of coverage range of the plurality of communication networks.

9. The electronic device according to claim 6 or 7, wherein when more than one location information is received, the processing device is adapted to determine the location information of the electronic device by averaging the more than one location information.

10. The electronic device according to any one of the claims 6-8, wherein the location request signal and the location response signal is transmitted via wireless communication.

11. The electronic device according to any one of the claims 6-9, wherein the location information includes position coordinates of Global Positioning System coordinates.
